# EUROPÄISCHE PATENTSCHRIFT

(11) **EP 3 976 952 B1**
(45) Veröffentlichungstag und Bekanntmachung des Hinweises auf die Patenterteilung: **05.07.2023**
(21) Anmeldenummer: 20730212.6
(22) Anmeldetag: 26.05.2020
(51) Int. Cl.: F02D 41/22, F02D 41/28

(54) **VERFAHREN ZUR ÜBERWACHUNG EINES INJEKTORS AUF MECHANISCHE SCHÄDIGUNG**
METHOD FOR MONITORING AN INJECTOR FOR MECHANICAL DAMAGE
PROCÉDÉ DE CONTRÔLE D'UN INJECTEUR POUR DÉTECTER DES ENDOMMAGEMENTS MÉCANIQUES

(30) Priorität: 29.05.2019 DE 102019003815
(43) Veröffentlichungstag der Anmeldung: 06.04.2022
(73) Patentinhaber: Rolls-Royce Solutions GmbH, 88045 Friedrichshafen (DE)
(72) Erfinder: STAUDT, Markus, 88214 Ravensburg (DE); GERBETH, Robby, 88069 Tettnang (DE); WALDER, Michael, 88212 Ravensburg (DE); KÖRNER, Tilman, 88285 Bodnegg (DE)
(74) Vertreter: Kordel, Mattias
(86) Internationale Anmeldenummer: PCT/EP2020/064612
(87) Internationale Veröffentlichungsnummer: WO 2020/239788

(56) Entgegenhaltungen:
- DE-A1-102013 106 061
- GB-A- 2 449 706
- JP-A- 2009 191 778
- US-A1- 2016 153 382

## Beschreibung

Die Erfindung betrifft ein Verfahren zur Überwachung eines Injektors auf mechanische Schädigung, bei dem aus einem Einzelspeicherdruck eine Soll-Istabweichung eines Arbeitspunkts der Einspritzung bestimmt wird und aus einer Mehrzahl von Soll-Istabweichungen der Arbeitspunkte eine abstrahierende Funktion, insbesondere Gauß-Normalverteilung, berechnet wird.

Aus der DE 10 2004 006 896 A1 ist ein Common-Railsystem mit Einzelspeichern bekannt, bei dem anhand des gemessenen Einzelspeicherdrucks die Einspritzung beurteilt wird. Hierzu wird eine Soll-Istabweichung des Spritzbeginns bestimmt und mit einem Toleranzband verglichen. Für das Spritzende gilt dies mutatis mutandis. Liegen sowohl die Spritzbeginn-Abweichung als auch die Spritzende-Abweichung innerhalb des Toleranzbandes, ist der Injektor fehlerfrei. Liegt die Spritzbeginn-Abweichung oder die Spritzende-Abweichung außerhalb des Toleranzbandes, so wird der Injektor als fehlerbehaftet bewertet und nachfolgend entweder die Steuerparameter des Injektors angepasst oder dieser deaktiviert. Die Fundstelle beschreibt ein rein reaktives System, bei dem ein Austausch des Injektors in einem starren Zeitintervall oder erst nach festgestelltem Fehlverhalten initiiert wird.

Aus der nicht vorveröffentlichten deutschen Patentanmeldung mit dem amtlichen Aktenzeichen DE 10 2019 001 677.7 ist ein Verfahren zur Zustandsprognose eines Injektors in einem Common-Railsystem bekannt, bei dem in einem ersten Schritt anhand des Einzelspeicherdrucks eine Soll-Istabweichung der Einspritzung bestimmt wird. In einem zweiten Schritt wird aus einer Mehrzahl von Abweichungen der Arbeitspunkte eine Gauß-Normalverteilung als abstrahierende Funktion bestimmt und wird die zeitliche Entwicklung deren Kenngrößen, also des Mittelwerts sowie der Standardabweichung, beobachtet. Auf Basis der zeitlichen Entwicklung der Kenngrößen wird in einem dritten Schritt eine Zustandsprognose abgeleitet und über eine Grenzwertbetrachtung der Injektor ganzheitlich als fehlerfrei bewertet oder eine Wartungsempfehlung zum Injektortausch abgegeben. Eine zum Beispiel schlechte Kraftstoffqualität kann bei diesem Verfahren jedoch eine vorzeitige Wartungsempfehlung bewirken.

DE 10 2013 106061 A1 offenbart eine Anormalitätsbestimmungsvorrichtung für einen Kraftstoffinjektor, die eine Anomalie anhand eines Vergleichs zwischen einem Schwellwert und einer Differenz zwischen einem Parameter und einem Referenzwert identifiziert.

Der Erfindung liegt daher die Aufgabe zugrunde, ein alternatives Verfahren zur Fehlerursachenabschätzung bereitzustellen.

Gelöst wird diese Aufgabe durch die Merkmale von Anspruch 1. Die Ausgestaltungen sind in den Unteransprüchen dargestellt.

Beim erfindungsgemäßen Verfahren zur Überwachung eines Injektors auf mechanische Schädigung wird aus dem Einzelspeicherdruck eine Soll-Istabweichung eines Arbeitspunkts der Einspritzung bestimmt und aus einer Mehrzahl von Soll-Istabweichungen der Arbeitspunkte eine abstrahierende Funktion, insbesondere Gauß-Normalverteilung, berechnet. Ferner wird die abstrahierende Funktion mit einem vorgegebenen Schädigungsmuster verglichen und eine Verschleißursache anhand des Vergleichs zugeordnet. Der Weiterbetrieb des Injektors erfolgt dann auf Basis des Vergleichs. Als Schädigungsmuster sind beispielsweise die charakteristischen Muster für ein Lebensdauerende des Injektors, eine Düsenverkokung/Kavitation oder ein Pilotventilverschleiß hinterlegt. Die Ursache für einen Pilotventilverschleiß ist eine schlechte Kraftstoffqualität. Der Injektor kann trotzdem bis zum Erreichen der Verschleißgrenze betreiben werden, da dies keinen Einfluss auf die Schadstoffgrenzwerte hat. Flankierend wird dem Betreiber vor dem eigentlichen Wartungstermin des Injektors bereits eine Empfehlung zum Kraftstofffilter-Tausch angezeigt und darauf hingewiesen, dass die Kraftstoffqualität wohl außerhalb der Betriebsmittelvorschrift liegt.

Präzisiert wird das Verfahren indem die Lage des Ist-Arbeitspunkts in einem Injektor-Kennfeld ermittelt wird, wobei das Injektor-Kennfeld mehrere Bereiche aufweist, beispielsweise Bereiche für den ballistischen Betrieb. Für jeden Bereich des Injektor-Kennfelds wird dann eine bereichsindividuelle abstrahierende Funktion aus den Soll-Istabweichungen der Arbeitspunkte bestimmt und wird anschließend die Gesamtheit der bereichsindividuellen abstrahierenden Funktionen mit dem Schädigungsmuster verglichen. Eine Ausführungsform hierzu sieht vor, dass jede bereichsindividuelle abstrahierenden Funktion über eine Bewertungsmatrix in Form einer bereichsindividuellen Kennzahl charakterisiert wird, aus den bereichsindividuellen Kennzahlen eine Betriebsmuster erstellt wird und das Betriebsmuster wiederum mit dem Schädigungsmuster auf Identität verglichen wird. Ergänzt werden kann das Verfahren durch eine Zustandsvorhersage, bei der die zeitliche Entwicklung der abstrahierenden Funktion beobachtet wird und der Vergleich mit dem Schädigungsmuster anhand der vorhergesagten abstrahierenden Funktion getroffen wird.

Die Erfindung bietet die bekannten Vorteile einer zustandsbasierten Wartung, das heißt, der Injektor wird eben nicht mehr starr in vorgegebenen Wartungsintervallen getauscht, sondern in Abhängigkeit vom jeweiligen Verschleiß. Gerade bei Großdieselmotoren mit zum Beispiel sechszehn Zylindern ist dies, aufgrund der Ersatzteilkosten für einen Injektor, für den Betreiber ein entscheidender Kostenvorteil. Die Mustererkennung erlaubt eine verbesserte Ursachenabschätzung und erlaubt damit letztendlich auch eine an die Situation angepasste Wartungsstrategie. Die Prognose wiederum bietet den Vorteil einer frühzeitigen Ersatzteilbeschaffung einschließlich einer frühzeitigen Beauftragung des Servicepersonals. In der Summe ergibt sich daher ein höherer Verfügungsgrad der Brennkraftmaschine. Als softwarebasierte Lösung kann das Verfahren nachträglich im elektronischen Steuergerät ohne Änderung der Sensorik als Programm-Ergänzung appliziert werden.

In den Figuren ist ein bevorzugtes Ausführungsbeispiel dargestellt. Es zeigen:
- Fig. 1: ein Systemschaubild,
- Fig. 2: einen Verlauf des Einzelspeicherdrucks,
- Fig. 3: ein Injektor-Kennfeld,
- Fig. 4: einen Ausschnitt des Injektor-Kennfelds,
- Fig. 5: eine Bewertungsmatrix,
- Fig. 6: eine Bewertungsmatrix mit Betriebsmuster,
- Fig. 7: mehrere Schädigungsmuster und
- Fig. 8: einen Programm-Ablaufplan.

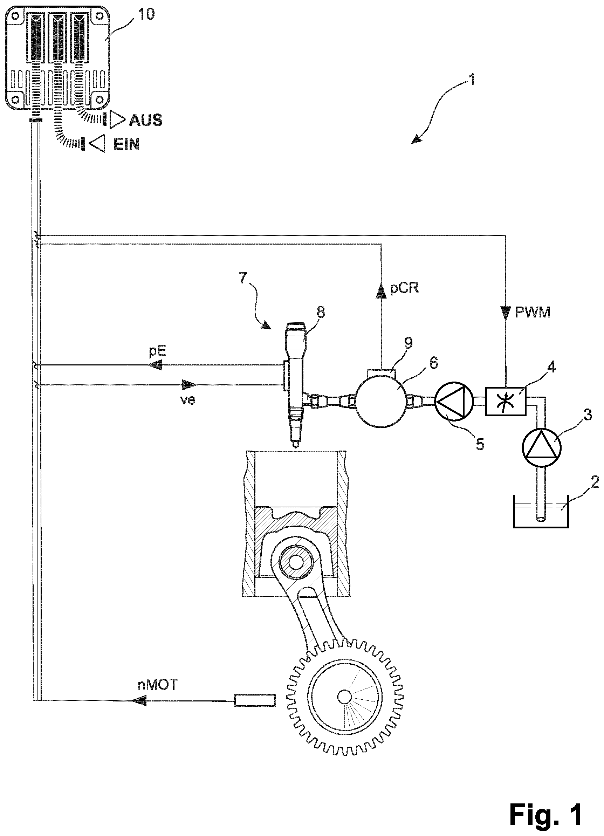

Die Figur 1 zeigt ein Systemschaubild einer elektronisch gesteuerten Brennkraftmaschine 1 mit einem Common-Railsystem nebst Einzelspeichern. Das Common-Railsystem umfasst folgende mechanische Komponenten: eine Niederdruckpumpe 3 zur Förderung von Kraftstoff aus einem Kraftstofftank 2, eine veränderbare Saugdrossel 4 zur Beeinflussung des durchströmenden Kraftstoff-Volumenstroms, eine Hochdruckpumpe 5 zur Förderung des Kraftstoffs unter Druckerhöhung, ein Rail 6 zum Speichern des Kraftstoffs und Injektoren 7 zum Einspritzen des Kraftstoffs in die Brennräume der Brennkraftmaschine 1. Bei der dargestellten Ausführungsform ist ein Einzelspeicher 8 im Injektor 7 als zusätzliches Puffervolumen integriert. Der vom Injektor 7 einzuspritzende Kraftstoff wird aus dem Einzelspeicher 8 entnommen. Die Zulaufleitung vom Rail 6 zum Einzelspeicher 8 ist in der Art ausgelegt, dass in der Einspritzpause gerade so viel Kraftstoff aus dem Rail 6 in den Einzelspeicher 8 gefördert wird, dass der Einzelspeicher 8 zu Beginn der neuen Einspritzung wieder gefüllt ist. Die Zulaufleitung besitzt daher einen definierten hydraulischen Widerstand.

Die Betriebsweise der Brennkraftmaschine 1 wird durch ein elektronisches Steuergerät 10 bestimmt. Das elektronische Steuergerät 10 beinhaltet die üblichen Bestandteile eines Mikrocomputersystems, beispielsweise einen Mikroprozessor, I/O-Bausteine, Puffer und Speicherbausteine (EEPROM, RAM). In den Speicherbausteinen sind die für den Betrieb der Brennkraftmaschine 1 relevanten Betriebsdaten in Kennfeldern/Kennlinien oder als Motormodelle appliziert. Über diese berechnet das elektronische Steuergerät 10 aus den Eingangsgrößen die Ausgangsgrößen. In der Figur 1 sind exemplarisch folgende Eingangsgrößen dargestellt: der Raildruck pCR, der mittels eines Rail-Drucksensors 9 gemessen wird, eine Motordrehzahl nMOT, der Einzelspeicherdruck pE und eine Eingangsgröße EIN. Unter der Eingangsgröße EIN sind die Leistungsvorgabe durch den Betreiber und die weiteren Sensorsignale zusammengefasst, beispielsweise der Ladeluftdruck eines Abgasturboladers. In der Figur 1 sind als Ausgangsgrößen des elektronischen Steuergeräts 10 ein Signal PWM zur Ansteuerung der Saugdrossel 4, ein Signal ve zur Ansteuerung des Injektors 7 (Spritzbeginn/ Spritzende) und eine Ausgangsgröße AUS dargestellt. Die Ausgangsgröße AUS steht stellvertretend für ein Anzeigesignal auf einer Bedieneranzeige und für die weiteren Stellsignale zur Steuerung und Regelung der Brennkraftmaschine 1, beispielsweise für ein Stellsignal zur Aktivierung eines zweiten Abgasturboladers bei einer Registeraufladung.

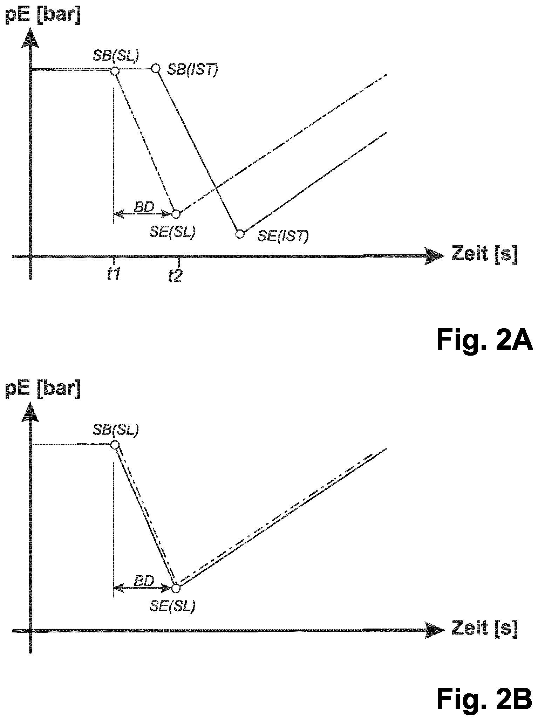

Die Figur 2 besteht aus den beiden Teilfiguren 2A und 2B, welche den Einzelspeicherdruck pE über der Zeit zeigen. In der Figur 2A ist ein Soll-Einspritzverlauf als strichpunktierte Linie dargestellt, während die durchgezogene Linie einen Ist-Einspritzverlauf kennzeichnet. Die Kurvenzüge gelten auch in analoger Weise für einen Verlauf über einem Kurbelwellenwinkel. Aus der Leistungsvorgabe des Betreibers wird in bekannter Weise eine Soll-Kraftstoffvolumen und der Einspritzzeitpunkt/Spritzbeginn berechnet. Das Soll-Kraftstoffvolumen und der Raildruck definieren dann eine Spritzdauer und letztendlich eine Bestromungsdauer, mit welcher der Injektor angesteuert wird. Wie in der Figur 2A dargestellt, initiiert das elektronische Steuergerät zu einem ersten Zeitpunkt t1 eine Einspritzung und deaktiviert dann zu einem zweiten Zeitpunkt t2 die Einspritzung. Der Zeitraum t1/t2 entspricht einer Bestromungsdauer BD. Zu diesem Einspritzereignis korrespondiert der Verlauf des Einzelspeicherdrucks pE mit einem Soll-Spritzbeginn SB(SL) und einem Soll-Spritzende SE(SL). Aufgrund von Signallaufzeiten, Toleranzen oder Alterungseffekten weicht der tatsächliche Verlauf der Einspritzung jedoch von der Vorgabe ab. Den tatsächlichen Verlauf der Einspritzung bestimmt das elektronische Steuergerät aus dem gemessenen Einzelspeicherdruck pE. In der Figur 2A ist dies als Ist-Spritzbeginn SB(IST) und als Ist-Spritzende SE(IST) dargestellt. Vom elektronischen Steuergerät wird nun der Ist-Verlauf dem Soll-Verlauf angepasst, indem die Bestromungsdauer BD verändert wird. Der angepasste Verlauf ist in der Figur 2B entsprechend dargestellt. Das Verfahren lässt sich in analoger Vorgehensweise auch über eine Anpassung des Spritzbeginns realisieren.

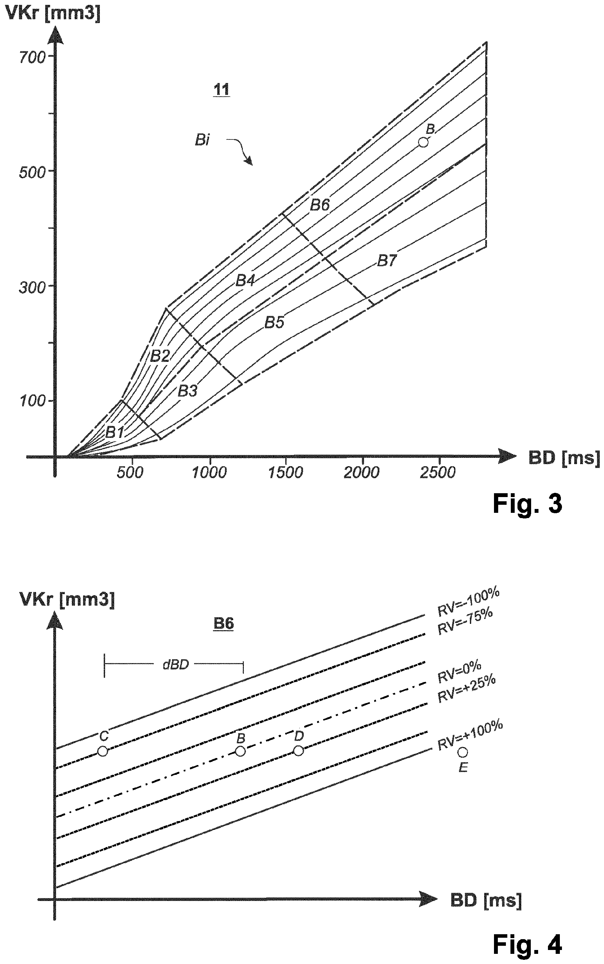

Die Figur 3 zeigt ein Injektor-Kennfeld 11 für einen idealen Injektor. Auf der Abszisse ist die Bestromungsdauer BD in Millisekunden und auf der Ordinate das einzuspritzende Kraftstoffvolumen VKr in Kubikmillimeter dargestellt. Das Injektor-Kennfeld 11 zeigt sieben Betriebsbereiche Bi mit den Bezugszeichen B1 bis B7. Exemplarisch ist im Betriebsbereich B6 ein Ist-Arbeitspunkt B eingezeichnet. Die Betriebsbereiche B1 bis B3 kennzeichnen den ballistischen Betrieb des Injektors. Die parallelen Linien innerhalb des Injektor-Kennfelds 11 korrespondieren zum Raildruck pCR. Bei der weiteren Beschreibung der Erfindung wird von deren Maximalumfang ausgegangen, nämlich dass das Injektor-Kennfeld mehrere Bereich Bi aufweist und für jeden Bereich eine bereichsindividuelle abstrahierende Funktion für die Mustererkennung bestimmt wird. In einer einfacheren Form ist die Erfindung jedoch auch für ein Injektor-Kennfeld mit nur einem Bereich Bi anwendbar.

Die Figur 4 zeigt einen Ausschnitt des Injektor-Kennfelds 11 der Figur 3, genauer gesagt, den Bereich B6. Dargestellt ist eine Geradenschar, welche den maximalen Verstellbereich der Bestromungsdauer BD definiert. Begrenzt wird die Geradenschar durch eine Gerade mit dem Referenzwert RV=-100% und einer Gerade mit dem Referenzwert RV=+100%.

Die strichpunktierte Gerade mit dem Referenzwert RV=0% entspricht der idealen Injektor-Kennlinie. Im Idealfall liegt der Punkt B auf der Gerade mit dem Referenzwert RV=0%. Aufgrund von Alterungseffekten kann der Punkt B jedoch zum Beispiel auf der Gerade mit dem Referenzwert RV=-75% liegen. In der Figur entspricht dies dem Punkt C. Für den Punkt C gilt, dass die Bestromungsdauer BD gegenüber dem Idealwert, Punkt B, um 75% der maximal zulässigen Korrektur von
-100% verkürzt wurde, um die vorgegebene Kraftstoffmenge einzuspritzen. Gezählt wird daher ein Einspritzereignis im Bereich B6 mit minus fünfundsiebzig Prozent als diskreter Wert. Für den Punkt D gilt dies in analoger Vorgehensweise, das heißt, es wird ein Einspritzereignis im Bereich B6 mit plus fünfundzwanzig Prozent gezählt. Der Punkt E liegt außerhalb des Verstellbereichs.

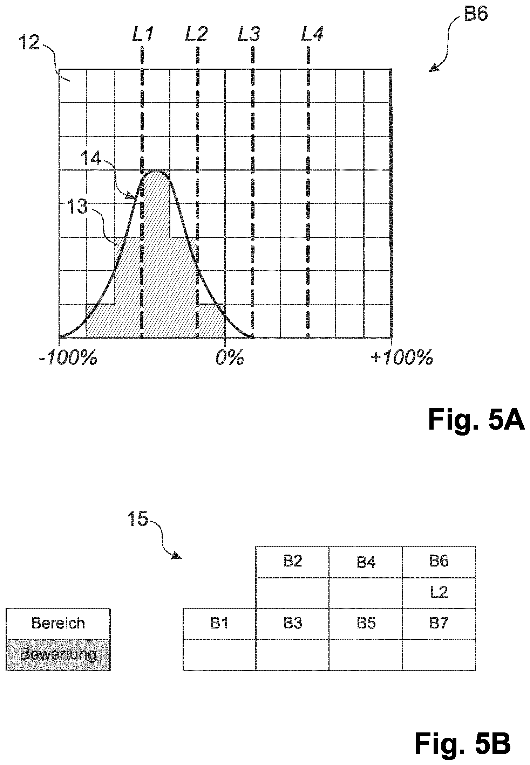

Die Figur 5 umfasst die Teilfiguren 5A und 5B, in welchen die prinzipielle Vorgehensweise zur Festlegung eines Betriebsmusters dargestellt ist. Die Figur 5A zeigt eine Bewertungsmatrix 12 und die Figur 5B zeigt ein hieraus ermitteltes Betriebsmuster 15. Die Abszisse der Bewertungsmatrix 12 entspricht dem Bereich von -100% bis +100% der Figur 4. Auf der Ordinate ist der Dichteverlauf abgetragen. Beim vorliegenden Beispiel ist in der Figur 5A ein Histogramm 13 als schraffierte Fläche dargestellt. Das Histogramm 13 bildet die in Klassen gezählten Soll-Istabweichungen der Arbeitspunkte des Bereichs B6 ab, beispielsweise die beiden Werte der Figur 4, also minus fünfundsiebzig Prozent und plus fünfundzwanzig Prozent. Zum Histogramm 13 korrespondiert die Gauß-Normalverteilung 14. Die beiden Funktionen sind in der weiteren Beschreibung als äquivalent zu sehen. Das weitere Verfahren besteht nun darin, dass die Gauß-Normalverteilung 14 bzw. das Histogramm 13 hinsichtlich der örtlichen Lage innerhalb der Bewertungsmatrix 12 beurteilt wird. Dies erfolgt indem in einem ersten Schritt geprüft wird ob die Gauß-Normalverteilung im positiven Bereich 0% bis +100% oder im negativen Bereich 0% bis -100% der Bewertungsmatrix liegt. In einem zweiten Schritt wird dann anhand der Linien L1 bis L4 geprüft, welche geometrische Position die Flächenmehrheit der Gauß-Normalverteilung hat, beispielsweise die Flächenmehrheit von 60%. Beim dargestellten Beispiel liegt der 60%-ige Flächenanteil bezogen auf die Gesamtfläche in Zeichnungsrichtung gesehen links der Linie L2 in Richtung der minus 100%-Markierung. Entsprechend wird dieser Gauß-Normalverteilung die Kennzahl L2 zugeordnet und im Betriebsmuster 15 der Figur 5B im Bereich B6 abgelegt.

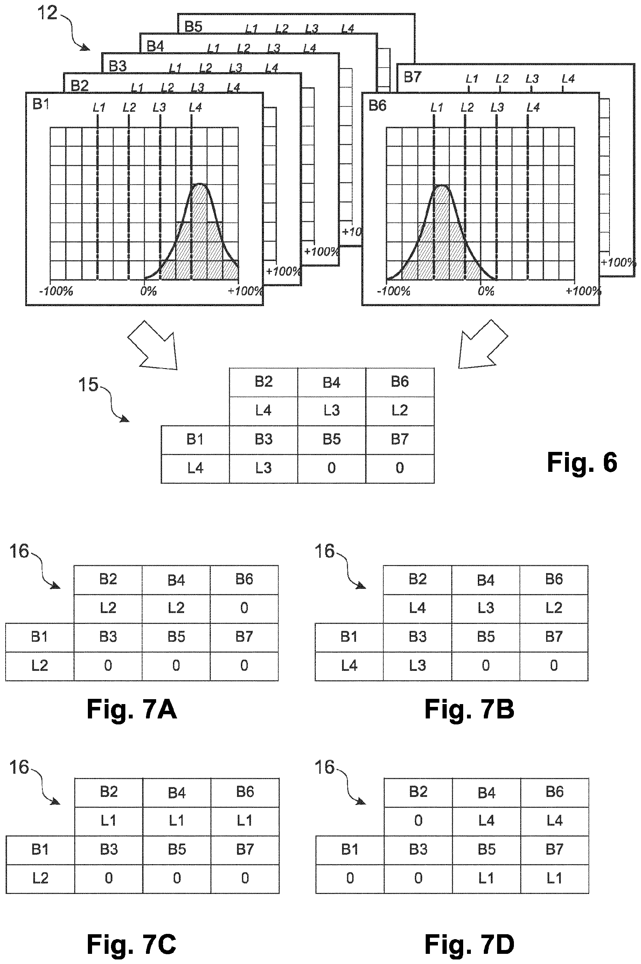

In der Figur 6 ist die Vorgehensweise der Figur 5 gesamtheitlich für die Bereiche B1 bis B7 des Injektor-Kennfelds dargestellt. Beim Bereich B1 liegt der 60%-ige Flächenanteil rechts der Linie L4 in Richtung des +100%-Markierung. Über die Bewertungsmatrix wird daher dieser Gauß-Normalverteilung die bereichsindividuelle Kennzahl L4 zugeordnet und in das Betriebsmuster 15 eingetragen. Für den Bereich B6 wurde das Beispiel der Figur 5 zugrunde gelegt, d.h. im Betriebsmuster 15 ist im Bereich B6 die Kennzahl L2 eingetragen. Die weiteren Kennzahlen für die Bereich B2, B3, B4, B5 und B7 werden in gleicher Weise ermittelt und in das Betriebsmuster 15 eingetragen.

In der Figur 7 sind die vorgegebenen Schädigungsmuster 16 dargestellt. Es zeigen: die Figur 7A einen normalen Einlauf des Injektors, die Figur 7B ein erreichtes Lebensdauerende des Injektors, die Figur 7C ein Pilotventilverschleiß und die Figur 7D eine Düsenverkokung bzw. Kavitation. Das weitere Verfahren besteht nun darin, dass das Betriebsmuster 15 der Figur 6 mit dem vorgegebenen Schädigungsmuster der Figur 7 auf Identität verglichen wird. Beim vorliegenden Beispiel ist das Betriebsmuster 15 mit dem Schädigungsmuster der Figur 7B identisch, das heißt, der Injektor hat sein Lebensende erreicht. Der weitere Betrieb der Brennkraftmaschine erfolgt dann anhand des Vergleichs. In diesem Fall wird dem Betreiber eine Wartung empfohlen und der Servicetechniker informiert. Wird das Schädigungsmuster der Figur 7C erkannt, so wird dem Betreiber ein Hinweis auf schlechte Kraftstoffqualität anzeigt. Der Injektor muss nicht getauscht werden und kann daher bis zum Erreichen der Verschleißgrenze betrieben werden. Ergänzend wird dem Betreiber jedoch bereits vor Ablauf der Injektor-Lebensdauer ein Kraftstofffilter-Tausch empfohlen. Beim Schädigungsmuster der Figur 7D liegt Düsenverkokung bzw. Kavitation vor. In diesem Fall ist zwar das Verhalten des Injektors über eine Anpassung der Steuerparameter (Spritzbeginn/Spritzende) korrigierbar aber das Spritzbild kann verändert sein, was wiederum bei emissionskritischen Anwendungen eine vorzeitige Wartung auslöst.

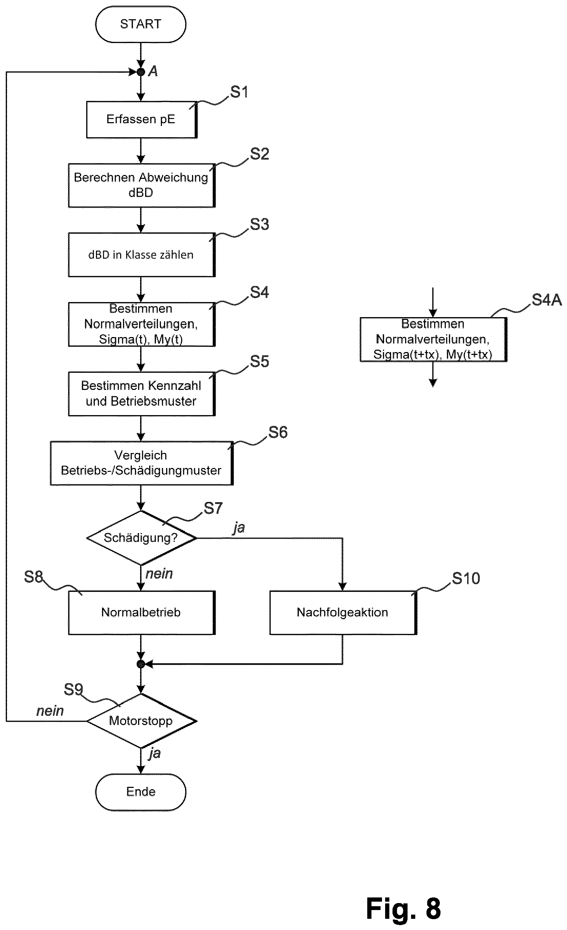

In der Figur 8 ist das Verfahren in einem Programm-Ablaufplan dargestellt. Bei S1 wird der Einzelspeicherdruck pE innerhalb eines vorgegebenen Zeitfensters oder Kurbelwellen-Winkelbereichs eingelesen. Bei S2 werden aus dem Einzelspeicherdruck pE zunächst die Spritzdauer und hieraus die Bestromungsdauer BD bestimmt. Ebenfalls bei S2 wird dann die Bestromungsdauer BD als Ist-Arbeitspunkt einem Bereich des Injektor-Kennfelds zugeordnet und eine bereichsindividuelle Soll-Istabweichung dBD berechnet, siehe Figur 4. Im Anschluss daran wird bei S3 die Soll-Istabweichung zur Datenreduktion in eine Klasse gezählt, woraus das bereichsindividuelle Histogramm entsteht. Aus dem bereichsindividuellen Histogramm werden dann bei S4 die bereichsindividuelle Gauß-Normalverteilung und deren Kenngrößen bestimmt. Der Schritt S4 beschreibt daher den Übergang von diskreten Zahlenwerten zu einer mathematischen Funktion. Bekanntermaßen sind die Kenngrößen einer Gauß-Normalverteilung der Mittelwert My und die Standardabweichung Sigma. Bei S5 wird dann der bereichsindividuellen Gauß-Normalverteilung über die Bewertungsmatrix eine Kennzahl zugeordnet, beispielsweise für den Bereich B6 die Kennzahl L2. Ebenfalls bei S5 wird diese Kennzahl in das Betriebsmuster eingetragen. Im Betriebsmuster sind dann für alle Bereich B1 bis B7 des Injektor-Kennfelds die Kennzahlen abgelegt. Bei S6 wird das Betriebsmuster mit dem Schädigungsmuster auf Identität verglichen. Mit anderen Worten: bei S6 erfolgt die Mustererkennung. Insofern entspricht der Schritt S6 der Beschreibung zu den Figuren 6 und 7. Danach wird bei S7 geprüft, ob eine Schädigung vorliegt. Bei negativem Prüfergebnis bei S7, Abfrageergebnis S7: nein, bleibt bei S8 der Normalbetrieb gesetzt und der Programm-Ablauf wird bei S9 fortgesetzt. Bei positivem Prüfergebnis bei S7, wird bei S10 eine Nachfolgeaktion initiiert, das heißt, der Weiterbetrieb des Injektors erfolgt auf Basis des Vergleichs. Im Anschluss wird bei S9 geprüft, ob vom Betreiber ein Motorstopp initiiert wurde. Ist dies nicht der Fall, so verzweigt der Programm-Ablaufplan zum Punkt A. Anderenfalls ist der Programm-Ablaufplan beendet.

Ergänzt werden kann der Programm-Ablaufplan durch eine Vorhersage. In diesem Fall wird der Schritt S4 durch den Schritt S4A ersetzt. Bei S4A wird die zeitliche Entwicklung der Gauß-Normalverteilung innerhalb eines Zeitraums beobachtet, zum Beispiel für tx=1000 Betriebsstunden. Anhand der zeitlichen Veränderung der Kenngrößen Sigma (t+tx) und My(t+tx) wird dann in analoger Vorgehensweise zur Beschreibung der Figuren 6 und 7 eine Mustererkennung durchgeführt.

Die Erfindung wurde anhand der Überwachung eines Injektors auf mechanische Schädigung beschrieben. Das Verfahren gemäß der Erfindung lässt sich auch auf eine Förderpumpe (Wasser, Öl) übertragen. Für diesen Anwendungsfall wird dann eine Soll-Istabweichung des geförderten Volumens ermittelt, in Klassen gezählt und eine Gauß-Normalverteilung ermittelt und diese mit einem Schädigungsmuster verglichen.

### Bezugszeichen

- 1: Brennkraftmaschine
- 2: Kraftstofftank
- 3: Niederdruckpumpe
- 4: Saugdrossel
- 5: Hochdruckpumpe
- 6: Rail
- 7: Injektor
- 8: Einzelspeicher
- 9: Rail-Drucksensor
- 10: Elektronisches Steuergerät
- 11: Injektor-Kennfeld
- 12: Bewertungsmatrix
- 13: Histogramm
- 14: Gauß-Normalverteilung
- 15: Betriebsmuster
- 16: Schädigungsmuster

## Patentansprüche

1. Verfahren zur Überwachung eines Injektors (7) auf mechanische Schädigung, bei dem aus einem Einzelspeicherdruck (pE) eine Soll-Istabweichung eines Arbeitspunkts der Einspritzung bestimmt wird, aus einer Mehrzahl von Soll-Istabweichungen der Arbeitspunkte eine abstrahierende Funktion, insbesondere Gauß-Normalverteilung (14), berechnet wird, bei dem die abstrahierende Funktion mit einem vorgegebenen Schädigungsmuster (16) verglichen wird, anhand des Vergleichs eine Verschleißursache zugeordnet wird und bei dem der Weiterbetrieb des Injektors (7) auf Basis des Vergleichs erfolgt.

2. Verfahren nach Anspruch 1, **dadurch gekennzeichnet, dass** anhand der Lage des Ist-Arbeitspunkts in einem Injektor-Kennfeld (11) ein Bereich (Bi) des Injektor-Kennfelds (11) festgelegt wird, für jeden Bereich (Bi) des Injektor-Kennfelds (11) eine bereichsindividuelle abstrahierende Funktion aus den Soll-Istabweichungen der Arbeitspunkte bestimmt wird und die Gesamtheit der bereichsindividuellen abstrahierenden Funktionen mit dem Schädigungsmuster (16) verglichen wird.

3. Verfahren nach Anspruch 2, **dadurch gekennzeichnet, dass** jede bereichsindividuelle abstrahierenden Funktion über eine Bewertungsmatrix (12) in Form einer bereichsindividuellen Kennzahl charakterisiert wird, aus den bereichsindividuellen Kennzahlen eine Betriebsmuster (15) erstellt wird und das Betriebsmuster (15) mit dem Schädigungsmuster (16) auf Identität verglichen wird.

4. Verfahren nach Anspruch 3, **dadurch gekennzeichnet, dass** eine zeitliche Entwicklung der bereichsindividuellen abstrahierenden Funktion beobachtet wird und der Vergleich mit dem Schädigungsmuster (16) auf Basis der vorhergesagten abstrahierenden Funktion getroffen wird.

## Claims

1. Method for monitoring an injector (7) for mechanical damage, in which a target-actual deviation of an operating point of the injection is determined from a single reservoir pressure (pE), an abstracting function, in particular a Gaussian normal distribution (14), is calculated from a plurality of target-actual deviations of the operating points, in which the abstracting function is compared with a predetermined damage pattern (16), a wear cause is assigned on the basis of the comparison, and in which the injector (7) continues to operate on the basis of the comparison.

2. Method according to claim 1, **characterised in that** an area (Bi) of the injector characteristic diagram (11) is defined on the basis of the position of the actual operation point in an injector characteristic diagram (11), an area-individual abstracting function is determined for each area (Bi) of the injector characteristic diagram (11) from the target-actual deviations of the operating points, and the totality of the area-individual abstracting functions is compared with the damage pattern (16).

3. Method according to claim 2, **characterised in that** each area-individual abstracting function is **characterised by** means of an evaluation matrix (12) in the form of an area-individual characteristic number, an operating pattern (15) is produced from the area-individual characteristic numbers and the operating pattern (15) is compared with the damage pattern (16) for identity.

4. Method according to claim 3, **characterised in that** a time-development of the area-individual abstracting function is observed and the comparison with the damage pattern (16) is made on the basis of the predicted abstracting function.

## Revendications

1. Procédé de surveillance d'un injecteur (7) en vue d'une détérioration mécanique, dans lequel une déviation de tige de consigne d'un point de travail de l'injection est déterminée à partir d'une pression d'accumulation individuelle (pE), une fonction d'abstraction, en particulier une distribution normale gaussienne (14), est calculée à partir d'une pluralité de déviations de tige de consigne des points de travail, dans lequel la fonction d'abstraction est comparée à un modèle de détérioration prédéfini (16), une cause d'usure est associée à l'aide de la comparaison et dans lequel la poursuite du fonctionnement de l'injecteur (7) a lieu sur la base de la comparaison.

2. Procédé selon la revendication 1, **caractérisé en ce que**, à l'aide de la position du point de travail réel dans un champ caractéristique d'injecteur (11), une zone (Bi) du champ caractéristique d'injecteur (11) est déterminée, pour chaque zone (Bi) du champ caractéristique d'injecteur (11) une fonction d'abstraction individuelle à la zone est déterminée à partir des déviations de tige de consigne des points de travail et l'ensemble des fonctions d'abstraction individuelles à la zone est comparée avec le modèle de détérioration (16).

3. Procédé selon la revendication 2, **caractérisé en ce que** chaque fonction d'abstraction individuelle à la zone est **caractérisée par** une matrice d'évaluation (12) sous la forme d'un indice individuel à la zone, un modèle de fonctionnement (15) est établi à partir des indices individuels à la zone et le modèle de fonctionnement (15) est comparé au modèle de détérioration (16) en ce qui concerne l'identité.

4. Procédé selon la revendication 3, **caractérisé en ce qu'**un développement dans le temps de la fonction d'abstraction individuelle à la zone est observé et la comparaison avec le modèle de détérioration (16) est effectuée sur la base de la fonction d'abstraction prédite.
